# EUROPÄISCHE PATENTSCHRIFT

(11) **EP 2 195 211 B1**
(45) Veröffentlichungstag und Bekanntmachung des Hinweises auf die Patenterteilung: **01.02.2012**
(21) Anmeldenummer: 08785906.2
(22) Anmeldetag: 03.07.2008
(51) Int. Cl.: B60S 1/04

(54) **WISCHANLAGE MIT EINEM WISCHANTRIEB ZUM ANTRIEB EINES WISCHGESTÄNGES**
WIPER SYSTEM HAVING A WIPER DRIVE FOR DRIVING A WIPER LINKAGE
SYSTEME D'ESSUIE-GLACE A ENTRAINEMENT D'ESSUIE-GLACE POUR L'ENTRAINEMENT D'UNE TIMONERIE D'ESSUIE-GLACE

(30) Priorität: 28.08.2007 DE 102007040504
(43) Veröffentlichungstag der Anmeldung: 16.06.2010
(73) Patentinhaber: Robert Bosch GmbH, 70442 Stuttgart (DE)
(72) Erfinder: BAUER, Guenter, 76571 Gaggenau (DE); BENNER, Andreas, 77830 Buehlertal (DE); STEINMETZ, Martin, 70439 Stuttgart (DE); DIETRICH, Jan, 77815 Buehl (DE); KRAUS, Achim, 77815 Buehl (DE)
(86) Internationale Anmeldenummer: PCT/EP2008/058569
(87) Internationale Veröffentlichungsnummer: WO 2009/049933

(56) Entgegenhaltungen:
- EP-A- 1 291 254
- EP-A- 1 481 858
- WO-A-02/14123
- WO-A-03/097419
- US-B1- 6 510 580

## Beschreibung

### Stand der Technik

Die vorliegende Erfindung betrifft eine Wischanlage mit einem Wischantrieb zum Antrieb eines Wischgestänges, wobei die Wischanlage an drei Stellen mit dem Fahrzeug verbunden ist.

Bei einer Wischanlage kommt es beim Betrieb zu unerwünschten Bewegungen bzw. Verschiebungen, die von Kräften und Momenten der Wischanlage herrühren. Es ist daher erforderlich, den Wischantrieb gut an dem Fahrzeug bzw. an die Karosserie zu befestigen. Bekannt ist es, den Wischantrieb an drei Stellen über eine Schraubverbindung an das Fahrzeug zu verschrauben. Wie jede Schraubverbindung hat diese jedoch den Nachteil eines relativ hohen Montageaufwands, insbesondere aufgrund der teilweise schlechten Zugänglichkeit und der vorherrschenden Enge im Motorinnenraum.

Aus der WO 03/097419 ist eine Wischanlage gemäß dem Oberbegriff des Anspruchs 1 bekannt.

### Vorteile der Erfindung

Die erfindungsgemäße Wischanlage mit einem Wischantrieb zum Antrieb eines Wischgestänges hat demgegenüber den Vorteil eines deutlich verringerten Montageaufwands. Besonders vorteilhaft ist, dass eine am Wischmotor ansonsten erforderliche Schraubverbindung durch eine einfache Steckverbindung ersetzt werden kann. Von großem Vorteil ist dabei, dass dennoch die gleichen Vorteile wie bei der Schraubverbindung gegeben sind, und zwar insbesondere, dass neben Kräften auch Momente der Wischanlage an das Fahrzeug bzw. an die Karosserie übertragen werden können. Damit wird sichergestellt, dass die Wischanlage sich optimal am Fahrzeug abstützt und somit eine Bewegung der Wischanlage relativ zum Fahrzeug minimiert.

Weitere Vorteile und vorteilhafte Ausgestaltungen der Erfindung ergeben sich aus den Unteransprüchen und der Beschreibung.

Vorteilhaft ist, ein Steckelement des Wischantriebs an seinem Endbereich in Form einer Gabel auszugestalten, die sich zur momentenabstützenden lösbaren Verbindung an eine als Zapfen- oder Bolzenelement ausgebildete Steckaufnahme abstützt. Damit ist eine einfache, momentenabstützende, lösbare und sichere Steckverbindung vom Wischantrieb zum Fahrzeug bzw. zur Karosserie gegeben.

Nach der Erfindung ist, das Steckelement des Wischantriebs in Form einer Zunge ausgebildet, die zur momentenabstützenden lösbaren Verbindung in eine als Hülle oder Buchse ausgebildete Steckaufnahme eingreift. Damit ist ebenfalls eine einfache, momentenabstützende, lösbare und sichere Steckverbindung vom Wischantrieb zum Fahrzeug bzw. zur Karosserie gegeben.

Nach der Erfindung lässt sich eine besonders feste Verbindung des Wischantriebs an die Karosserie erzielen, in dem die Zunge gewellt ausgebildet ist, wobei die Hülle oder Buchse eine Innenwandung aufweist, die ebenso entsprechend korrespondierend gewellt ausgeführt ist.

Eine einfach zu realisierende Gestaltung des Steckelements ergibt sich, wenn das Steckelement von einem Gehäuseteil des Wischantriebs ausgeht bzw. seitlich wegsteht.

Vorteilhaft zu verwirklichen ist es, wenn es sich bei dem Gehäuseteil des Wischantriebs um ein Platinengehäuseteil handelt, das dann mit angeformtem Steckelement einfach mit dem restlichen Gehäuse des Wischantriebs zum Beispiel verschraubt wird.

Vorteilhaft ist es außerdem, ein Steckelement zu verwirklichen, das von einem Getriebegehäuse eines Getriebes für einen Wischmotor des Wischantriebs ausgeht bzw. seitlich wegsteht.

### Zeichnung

Ausführungsbeispiele der Erfindung sind in der nachfolgenden Beschreibung näher erläutert und anhand der Zeichnung weiter verdeutlicht.

Es zeigen:
- Fig. 1: eine Wischanlage mit Wischgestänge und Wischantrieb, der mit einem erfindungsgemäßen Steckelement gemäß einem ersten nicht von den Ansprüchen abgedeckten Ausführungsbeispiel versehen ist,
- Fig. 2: eine Draufsicht auf den alleinigen Wischantrieb mit dem Steckelement nach Fig. 1,
- Fig. 3: eine Draufsicht auf den alleinigen Wischantrieb, der mit dem erfindungsgemäßen Steckelement gemäß einem zweiten Ausführungsbeispiel versehen ist und
- Fig. 4: eine Seitenansicht des Wischantriebs nach Fig. 3.

### Ausführungsformen der Erfindung

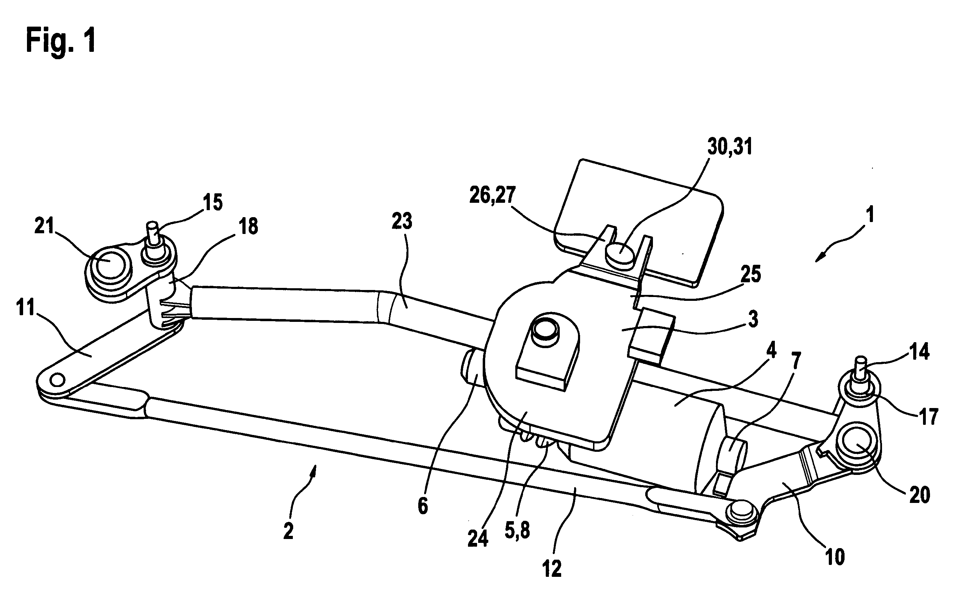

In Fig. 1 ist eine Wischanlage 1 für ein Fahrzeug gezeigt. Die Wischanlage 1 umfasst ein Wischgestänge 2, das über einen Wischantrieb 3 angetrieben ist. Der Wischantrieb 3 verfügt hierzu über eine Kurbel 6, die über eine Antriebsstange 7 gelenkig an einer ersten Antriebskurbel 10 angreift. Über eine ebenfalls an der Antriebsstange 7 gelenkig angreifende Schubstange 12 wird eine zweite Antriebskurbel 11 betätigt. Die erste Antriebskurbel 10 und zweite Antriebskurbel 11 sind drehfest mit entsprechenden Antriebswellen, einer ersten Antriebswelle 14 und einer zweiten Antriebswelle 15, verbunden. Über die erste Antriebskurbel 10 wird die erste Antriebswelle 14 und über die zweite Antriebskurbel 11 wird die zweite Antriebswelle 15 angetrieben. Die Antriebswellen 14, 15 stellen die Wischerwellen dar, die drehfest mit Wischerarmen des Fahrzeugs verbunden sind. An freien Enden der Wischerarme sind Wischblätter befestigt. Wischerarme und Wischerblätter sind der besseren Übersicht wegen nicht in die Fig. 1 eingezeichnet.

Die Antriebswellen 14, 15 sind in entsprechenden hülsenförmigen Aufnahmemitteln 17, 18 von Wischerlagern 20, 21 drehbar gelagert. Typischerweise enthalten die Aufnahmemittel 17, 18 eingesetzte Lagerbuchsen. Die erste Antriebswelle 14 ist in einem ersten Aufnahmemittel 17 eines ersten Wischerlagers 20 und die zweite Antriebswelle 15 ist in einem zweiten Aufnahmemittel 18 eines zweiten Wischerlagers 21 drehbar gelagert. Beide Wischerlager 20, 21 sind über ein Tragrohr 23 miteinander verbunden, das hierzu beispielsweise an die Aufnahmemittel 17, 18 angreift, die wiederum mit den Wischerlagern 20, 21 verbunden sind. Etwa in der Mitte des Tragrohrs 23 ist der Wischantrieb 3 als Antriebseinheit über das Gestänge 10, 11, 12 für die Wischblätter bzw. Wischarme angeordnet.

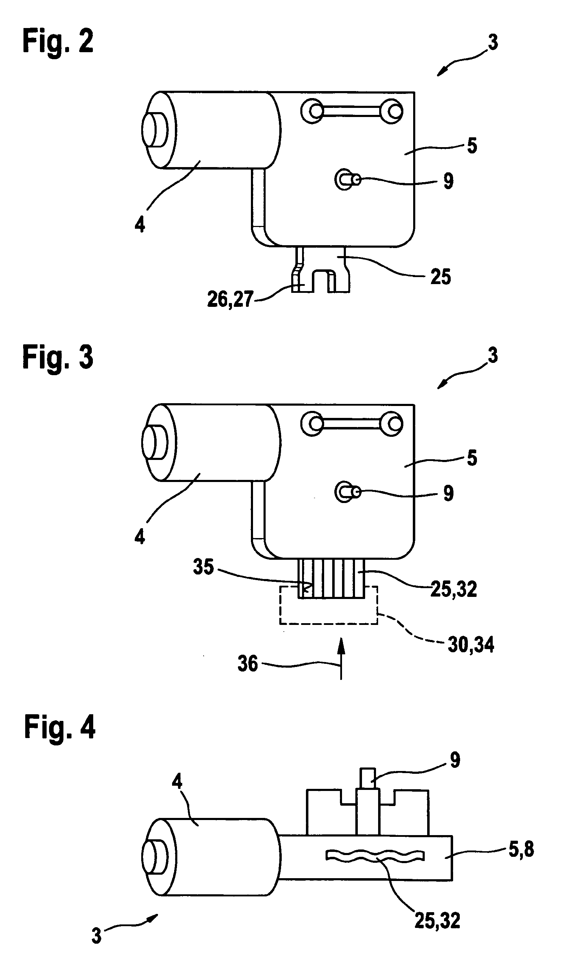

Der Wischantrieb 3 umfasst einen zylindrischen Wischmotor 4 mit anschließendem Getriebe 5, das in einem Getriebegehäuse 8 untergebracht ist. An dem Getriebegehäuse 8 ist beispielsweise ein nicht dargestellter Lagerstutzen zur Lagerung einer in Fig. 4 näher gezeigten Abtriebswelle 9 des Getriebes 5 vorgesehen. Die Fig. 4 zeigt eine Seitenansicht auf den Wischantrieb 3 in Richtung gemäß einem in Fig. 3 eingezeichneten Pfeil 36. Wie die Fig. 1 zeigt, ist der Abtriebswelle 9 die Kurbel 6 zugeordnet, die beispielsweise ein Kugelgelenk aufweist, über welches dann die Antriebsstange 7 betätigt wird. Zur Betätigung der Antriebsstange 7 wird die Kurbel 6 von der Antriebswelle 9 in eine Hin- und Herbewegung oder in eine umlaufende Bewegung versetzt. Üblicherweise ist der Wischantrieb 3 an seinem Getriebegehäuse 8 an dem Tragrohr 23 befestigt, so dass eine kompakte Baueinheit oder Baugruppe von Wischantrieb 3, Tragrohr 23, Wischgestänge 10, 11, 12 und Wischerlager 20, 21 mit Aufnahmemitteln 17, 18 für die Antriebswellen 14, 15 vorliegt. Bei der hier vorliegenden kompakten Baugruppe sind die Wischerlager 20, 21 und der Wischantrieb 3 fest miteinander verbunden. Gegenüber einer sogenannten "Loose Link" Wischanlage, bei der die Wischerlager und der Wischantrieb bzw. der Wischmotor nicht zueinander fixiert sind, haben die kompakten Wischanlagen 1 deutliche Vorteile in Bezug auf Toleranzen und auch im Fahrzeugverbau.

Das Getriebegehäuse 8 und ggf. teilweise der einen Elektromotor enthaltende Wischmotor 4 ist von einem Gehäuseteil 24 umgeben, das die Motorsteuerungselektrik bzw. Motorsteuerungselektronik und auch andere Bauteile auf einer Platine enthält und daher im Folgenden als Platinengehäuseteil 24 bezeichnet wird.

Die Wischerlager 20, 21 werden vorzugsweise mittels Schrauben an das Fahrzeug bzw. im Motorinnenraumbereich an die Karosserie an zwei Stellen in Nähe der Fahrzeugscheibe verschraubt. Aufgrund der hohen Kräfte und Momente, die im Betrieb der Wischanlage 1 vom Wischantrieb 3 und vom Wischgestänge 10, 11, 12 her ausgehen, kommt es zu unerwünschten Bewegungen bzw. Verschiebungen. Es ist daher dringend erforderlich, den Wischantrieb 3 gut an dem Fahrzeug bzw. an die Karosserie zu befestigen, wobei neben Kräften insbesondere auch auftretende Drehmomente an das Fahrzeug bzw. an die Karosserie übertragen werden müssen. Bekannt ist es hierzu, den Wischantrieb über eine Schraubverbindung an das Fahrzeug zu verschrauben. Wie jede Schraubverbindung hat diese jedoch den Nachteil eines relativ hohen Montageaufwands, insbesondere aufgrund der teilweise schlechten Zugänglichkeit und der vorherrschenden Enge im Motorinnenraum. Erfindungsgemäß wird nun eine Verringerung des Montageaufwands bei Erhalt der gleichen Vorteile der Schraubverbindung vorgeschlagen, und zwar, in dem der Wischantrieb 3 mittels eines länglichen Steckelements 25 einfach an das Fahrzeug bzw. an die Karosserie an einer Stelle gesteckt und anschließend an den zwei Stellen an den Wischerlagern 20, 21 verschraubt wird. Anstelle der bisher drei notwendigen Schraubverbindungen sind folglich nur noch zwei Schraubverbindungen auszuführen.

Das von dem Gehäuseteil 24 des Wischantriebs 3 seitlich wegstehende, längliche Steckelement 25 greift beim Stecken mit seinem Endbereich 26 in eine am Fahrzeug korrespondierend ausgebildete Steckaufnahme 30 ein. Wie die Fig. 1 zeigt, kann das Steckelement 25 an seinem Endbereich 26 die Form einer Gabel 27 aufweisen. Bei der Montage wird die Gabel 27 dann mit der Steckaufnahme 30 am Fahrzeug lösbar verbunden, ggf. unter leichter elastischer Verformung. Die Steckaufnahme 30 kann als Gegenhalterung für die Gabel 27, beispielsweise als Zapfen- oder Bolzenelement 31 ausgebildet sein. Nach dem Stecken der Gabel 27 an das Zapfen- oder Bolzenelement 31 bzw. dem Befestigen des Wischantriebs 3 am Fahrzeug, kann die Wischanlage 1 anschließend an ihren beiden Wischerlagern 20, 21 verschraubt werden. Es ist somit eine alternative Anbindung der Wischanlage 1 an das Fahrzeug gegeben, welche die in der Wischanlage 1 entstehenden Kräfte und Momente optimal im Fahrzeug abstützt und eine auftretende Bewegung der Wischanlage 1 relativ zum Fahrzeug minimiert, wobei der Montageaufwand erheblich reduziert ist. Das Steckelement 25 hat eine längliche Form, die, wie in Fig. 1 angedeutet, auch etwas abgebogen gestaltet sein kann.

In der Fig. 2 ist eine alleinige Draufsicht auf den Wischantrieb 3 ohne Wischgestänge und Tragrohr gezeigt, dessen Steckelement 25 an seinem Endbereich 26 ebenfalls die Form einer Gabel 27 aufweist. Im Unterschied zur Fig. 1 weist das Steckelement 25 gemäß Fig. 2 beispielsweise eine länglich gerade bzw. nicht abgebogene Form auf.

In der Fig. 3, einer alleinigen Draufsicht auf den Wischantrieb 3 ohne Wischgestänge und Tragrohr, ist ein zweites erfindungsgemäßes Ausführungsbeispiel gezeigt, bei dem das längliche Steckelement 25 in Form einer Zunge 32 ausgebildet ist. Bei der Montage wird die Zunge 32 in die korrespondierend gestaltete, am Fahrzeug gehaltene Steckaufnahme 30 eingeführt, die in Fig. 3 gestrichelt gezeichnet angedeutet ist. Die Steckaufnahme 30 ist beispielsweise in Form einer Hülle 34 der Buchse ausgebildet, welche die Zunge 32 im montierten Zustand zumindest teilweise haltend umgibt. Die Zunge 32 kann aus gewelltem Material, wie zum Beispiel Blech, hergestellt sein. Die Zunge 32 kann einstückig am Platinengehäuseteil 24 ausgeformt sein oder, wie in Fig. 4 dargestellt, auch am Getriebegehäuse 8 vorgesehen sein und von diesem seitlich abstehen. Die Steckaufnahme 25 hat im Fall einer gewellt gestalteten Zunge 32 dann eine Innenwandung 35, die ebenfalls entsprechend korrespondierend gewellt ausgeführt ist.

Mittels des länglich ausgeführten Steckelements 25, das vom Wischantrieb 3 seitlich vom Gehäuse 24 wegführt, wird der Wischantrieb 3 neben den auftretenden Kräften um den Steckpunkt auch gegen auftretende Momente aufgrund der Hebelwirkung des Steckelements 25 abgestützt. Im Gegensatz zu einer rotationssymmetrischen Stiftverbindung, die keine Momente und nur Kräfte in Y-und Z-Richtung übertragen kann, stellt dies einen erheblichen Vorteil dar.

Das Vorsehen des Steckelements 25 kann vom Getriebegehäuse 8 aus erfolgen und zum Beispiel einstückig an diesem angeformt sein. Möglich ist auch, das Steckelement 25 am Getriebegehäuse 8 anzubringen, beispielsweise durch verschrauben. Wie in Fig. 1 dargestellt, kann das Steckelement 25 auch am Gehäuseteil bzw. Platinengehäuseteil 24 ausgebildet sein und zum Beispiel einstückig angeformt sein.

Die Erfindung ist auf die geschilderte Gabelform 27 oder Zungenform 32 für das Steckelement 25 nicht beschränkt. Denkbar sind alle Arten von Steckverbindungen, die lösbar gestaltet sind und vom Gehäuse 24 des Wischantriebs 3 seitlich wegführen und in eine fahrzeugseitig vorgesehene Aufnahme oder Halterung einführbar sind.

Die erfindungsgemäße Wischanlage ist zum Antrieb für Scheibenwischer bei Kraftfahrzeugen vorgesehen.

## Patentansprüche

1. Wischanlage mit einem Wischantrieb zum Antrieb eines Wischgestänges, wobei die Wischanlage an drei Stellen mit dem Fahrzeug verbunden ist, wobei zwei Stellen an beiden Wischerlagern für das Wischgestänge vorgesehen sind, wobei zur Anbindung der Wischanlage (1) an der dritten Stelle mit dem Fahrzeug eine Steckverbindung (25, 30) an dem Wischantrieb (3) vorgesehen ist, dergestalt, dass zur Abstützung von aus der Wischanlage (1) herrührenden Kräften und Momenten zum Fahrzeug, ein von dem Wischantrieb (3) seitlich wegstehendes, längliches Steckelement (25) vorgesehen ist, das endseitig in eine am Fahrzeug gehaltene, korrespondierend ausgebildete Steckaufnahme (30) zur momentenabstützenden lösbaren Verbindung eingreift und das Steckelement (25) in Form einer Zunge (32) ausgebildet ist, die zur momentenabstützenden lösbaren Verbindung in eine als Hülle oder Buchse (34) ausgebildete Steckaufnahme (30) eingreift, **dadurch gekennzeichnet, daß** die Zunge (32) gewellt ausgebildet ist, wobei die Hülle oder Buchse (34) eine Innenwandung (35) aufweist, die entsprechend korrespondierend gewellt ausgeführt ist.

2. Wischanlage nach einem der vorhergehenden Ansprüche 1 bis 4, **dadurch gekennzeichnet, dass** das Steckelement (25) von einem Gehäuseteil (24) des Wischantriebs (3) ausgeht bzw. seitlich wegsteht.

3. Wischanlage nach Anspruch 5, **dadurch gekennzeichnet, dass** es sich bei dem Gehäuseteil (24) des Wischantriebs (3) um ein Platinengehäuseteil (24) handelt.

4. Wischanlage nach einem der vorhergehenden Ansprüche 1 bis 4, **dadurch gekennzeichnet, dass** der Wischantrieb (3) einen Wischmotor (4) und ein Getriebe (5) umfasst, wobei das Steckelement (25) von einem Getriebegehäuse (8) ausgeht bzw. seitlich wegsteht.

## Claims

1. Wiper system having a wiper drive for driving a wiper linkage, wherein the wiper system is connected to the vehicle at three points, wherein two points are provided on both on both wiper bearings for the wiper linkage, wherein, in order to connect the wiper system (1) to the vehicle at the third point, a plug-in connection (25, 30) is provided on the wiper drive (3) in such a manner that, in order to support forces and torques emanating from the wiper system (1) with respect to the vehicle, an elongate plug-in element (25) which protrudes laterally away from the wiper drive (3) is provided, the plug-in element engaging on the end side in a plug-in receptacle (30), which is held on the vehicle, is of corresponding design and is intended for the torque-supporting, releasable connection, and the plug-in element (25) is designed in the form of a tongue (32) which, for the torque-supporting, releasable connection, engages in a plug-in receptacle (30) designed as a casing or bushing (34), **characterized in that** the tongue (32) is of corrugated design, the casing or bushing (34) having an inner wall (35) which is correspondingly of correspondingly corrugated design.

2. Wiper system according to Claim 1, **characterized in that** the plug-in element (25) emerges or protrudes laterally away from a housing part (24) of the wiper drive (3).

3. Wiper system according to Claim 2, **characterized in that** the housing part (24) of the wiper drive (3) is a plate-type housing part (24).

4. Wiper system according to one of Claims 1 to 3, **characterized in that** the wiper drive (3) comprises a wiper motor (4) and a gearing (5), the plug-in element (25) emerging or protruding laterally away from a gearing housing (8).

## Revendications

1. Système d'essuie-glace comprenant un entraînement d'essuie-glace pour l'entraînement d'une timonerie d'essuie-glace, l'installation d'essuie-glace étant raccordée au véhicule en trois endroits, deux endroits étant prévus sur deux paliers d'essuie-glace pour la timonerie d'essuie-glace, un raccord à fiche (25, 30) étant prévu sur l'entraînement d'essuie-glace (3) pour relier le système d'essuie-glace (1) au véhicule au troisième endroit, de telle sorte que pour le support de forces et de couples provenant du système d'essuie-glace (1) par rapport au véhicule, un élément enfichable (25) allongé, saillant latéralement depuis l'entraînement d'essuie-glace (3) soit prévu, lequel vient en prise du côté de l'extrémité dans un logement d'enfichage (30) réalisé de manière correspondante et maintenu sur le véhicule, pour la connexion détachable supportant le couple, et l'élément enfichable (25) étant réalisé sous forme de langue (32) qui vient en prise pour la connexion détachable supportant le couple dans un logement d'enfichage (30) réalisé sous forme de gaine ou de douille (34), **caractérisé en ce que** la langue (32) est réalisée sous forme ondulée, la gaine ou la douille (34) présentant une paroi interne (35) qui est réalisée sous forme ondulée de manière correspondante.

2. Système d'essuie-glace selon la revendication 1, **caractérisé en ce que** l'élément enfichable (25) part ou fait saillie latéralement depuis une partie de boîtier (24) de l'entraînement d'essuie-glace (3).

3. Système d'essuie-glace selon la revendication 2, **caractérisé en ce que** la partie de boîtier (24) de l'entraînement d'essuie-glace (3) est une partie de boîtier à platine (24).

4. Système d'essuie-glace selon l'une quelconque des revendications 1 à 3, **caractérisé en ce que** l'entraînement d'essuie-glace (3) comprend un moteur d'essuie-glace (4) et une transmission (5), l'élément enfichable (25) partant ou faisant saillie latéralement depuis un boîtier de transmission (8).
